# EUROPÄISCHE PATENTANMELDUNG

(11) **EP 4 697 283 A1**
(43) Veröffentlichungstag der Anmeldung: **18.02.2026**
(21) Anmeldenummer: 25195283.4
(22) Anmeldetag: 12.08.2025
(51) Int. Cl.: G06V 10/70, B25J 9/16, G06V 20/52, G06V 40/10, G06V 40/20

(54) **VORRICHTUNG ZUR SICHEREN ABWESENHEITSERKENNUNG VON PERSONEN IN EINEM ÜBERWACHUNGSBEREICH**

(30) Priorität: 12.08.2024 DE 102024123003
(71) Anmelder: Pilz GmbH & Co. KG, 73760 Ostfildern (DE)
(72) Erfinder: Bakovic, Daniel, 73760 Ostfildern (DE); Ibrocevic, Onedin, 73760 Ostfildern (DE)
(74) Vertreter: Witte, Weller & Partner Patentanwälte mbB

(57) **Zusammenfassung**

Vorrichtung (100) zur sicheren Abwesenheitserkennung von Personen in einem Überwachungsbereich einer technischen Anlage, aufweisend: eine Datenerfassungseinheit (102), die dazu eingerichtet ist, Sensordaten bezogen auf eine Umgebung der technischen Anlage aufzunehmen, die von mindestens einem Sensor bereitgestellt werden, eine Merkmalsextraktionseinheit (104), die dazu eingerichtet ist, aus den Sensordaten menschenspezifische Merkmale zu extrahieren, sowie ein deduktives Entscheidungsmodul (106), das dazu eingerichtet ist, eine sicherheitsbezogene Aktion einzuleiten, wenn aus einer deduktiven Schlussfolgerung anhand der extrahierten menschenspezifischen Merkmale eine Anwesenheit einer Person nicht ausgeschlossen werden kann.

## Beschreibung

Die vorliegende Erfindung betrifft eine Vorrichtung zur sicheren Abwesenheitserkennung von Personen in einem Überwachungsbereich einer technischen Anlage sowie ein entsprechendes Verfahren hierfür.

Die sichere Personenerkennung erweist sich seit Jahren als besondere Herausforderung in der Sicherheitstechnik. Die Hauptschwierigkeit liegt darin, dass vorhandene Systeme und Sensoren zwar in der Lage sind, sich bewegende Objekte zu erkennen, aber nicht zuverlässig zwischen verschiedenen Arten von Objekten, wie zum Beispiel automatisierten geführten Fahrzeugen (AGVs) und Menschen, unterscheiden können. Daher werden häufig generalisierte Verfahren eingesetzt, die nicht spezifisch auf die Erkennung von Personen ausgelegt sind. Diese Verfahren basieren auf der Erfassung von Bewegung und Präsenz in einem überwachten Bereich, ohne jedoch die Art des Objekts zu identifizieren.

Es werden folglich starre Sicherheitskonzepte angewendet, um das Risiko für Bedienerpersonal an einer technischen Anlage zu minimieren. Solche Konzepte sind oft konservativ und legen strenge Sicherheitszonen fest, in denen Maschinen automatisch stoppen oder langsamer arbeiten, sobald eine Bewegung erkannt wird. Dies führt zu einer Reduzierung der Produktivität und Verfügbarkeit der Maschinen, da diese Sicherheitsmaßnahmen häufige Unterbrechungen und Verzögerungen verursachen. Zudem behindern starre Sicherheitskonzepte eine effektive Zusammenarbeit zwischen Menschen und Maschinen.

Der Bericht der Bundesanstalt für Arbeitsschutz und Arbeitsmedizin (BAuA) (A. Richter "Sichere Personenerkennung in der Mensch-Maschine-Interaktion" baua: Bericht kompakt 1. Auflage. Dortmund: Bundesanstalt für Arbeitsschutz und Arbeitsmedizin, 2017. Seiten: 3, Projektnummer: F 2322) beleuchtet diese Problematik ausführlich und untersucht verschiedene Systeme zur automatischen Personenerkennung. Er hebt hervor, dass unterschiedliche Technologien wie 3D-Kameras, Wärmebildkameras, Radarsysteme und druckempfindliche Fußbodenbeläge jeweils spezifische Vor- und Nachteile haben. Keines dieser Systeme allein kann die Anforderungen an eine präzise und zuverlässige Personenerkennung vollständig erfüllen. Zum Beispiel sind 3D-Kameras und Multikameras gut geeignet, um die Position von Personen zu erfassen, während Wärmebildkameras in schlecht beleuchteten Umgebungen nützlich sind und radarbasierten Systemen die Erkennung verdeckter Personen ermöglichen.

Jedoch haben alle diese Technologien ihre Grenzen. Ultraschallsysteme sind beispielsweise aufgrund ihrer geringen Winkelauflösung weniger geeignet für die genaue Positionsbestimmung. Auch 2D-Laserscanner und druckempfindliche Fußbodenbeläge können zwar Bewegungen erfassen, unterscheiden jedoch nicht zwischen verschiedenen Objekten, was sie für eine direkte Mensch-Maschine-Interaktion ungeeignet macht.

Die im Bericht vorgeschlagene Lösung ist der Einsatz von Multisensorsystemen. Durch die Kombination verschiedener Sensoren können die Stärken der einzelnen Systeme genutzt und ihre Schwächen ausgeglichen werden. Solche Systeme bieten Redundanz und Komplementarität, was zu einer zuverlässigeren und genaueren Personenerkennung führt. Redundanz bedeutet, dass Ausfälle oder Fehlmessungen einzelner Sensoren durch andere Sensoren kompensiert werden können, während Komplementarität sicherstellt, dass unterschiedliche Sensortypen verschiedene Merkmale und Aspekte der Umgebung erfassen, was zu einer umfassenderen Analyse führt. Die Herausforderung besteht jedoch darin, diese komplexen Systeme in die Praxis zu integrieren und sicherzustellen, dass sie unter verschiedenen Betriebsbedingungen zuverlässig funktionieren. Diese Integration erfordert eine sorgfältige Abstimmung und Kalibrierung der verschiedenen Sensoren sowie eine robuste Software zur Verarbeitung und Interpretation der kombinierten Daten.

Selbst wenn es gelingt, mehrere Sensoren zu integrieren, kann eine 100%ige Sicherheit, dass eine Person erkannt wird, nicht erreicht werden. Faktoren wie unerwartete Umgebungsbedingungen, technische Störungen oder menschliches Fehlverhalten können die Erkennungsgenauigkeit beeinträchtigen.

Vor diesem Hintergrund ist es daher eine Aufgabe der vorliegenden Offenbarung einen alternativen Ansatz zur sicheren Personenerkennung in der Sicherheitstechnik anzugeben. Insbesondere ist es eine Aufgabe alternative Ansätze zur sicheren Erkennung von Personen in Überwachungsbereichen technischer Anlagen zu entwickeln, die die Einschränkungen und Unsicherheiten bestehender Technologien überwinden und die Zuverlässigkeit und Sicherheit der Erkennung verbessern.

Gelöst wird diese Aufgabe durch eine Vorrichtung zur sicheren Abwesenheitserkennung von Personen in einem Überwachungsbereich einer technischen Anlage, aufweisend: eine Datenerfassungseinheit, die dazu eingerichtet ist, Sensordaten bezogen auf eine Umgebung der technischen Anlage aufzunehmen, die von mindestens einem Sensor bereitgestellt werden, eine Merkmalsextraktionseinheit, die dazu eingerichtet ist, aus den Sensordaten menschenspezifische Merkmale zu extrahieren, sowie ein deduktives Entscheidungsmodul, das dazu eingerichtet ist, eine sicherheitsbezogene Aktion einzuleiten, wenn aus einer deduktiven Schlussfolgerung anhand der extrahierten menschenspezifischen Merkmale eine Anwesenheit einer Person nicht ausgeschlossen werden kann.

Es ist somit eine Idee, die sichere Personenerkennung durch eine sichere Nicht-Personenerkennung zu ersetzen. Der Ansatz basiert somit auf einer Umkehrung der herkömmlichen Logik in der Automatisierungstechnik. Während die bestehende Technik versucht, Personen mit höchstmöglicher Sicherheit zu identifizieren, schlägt dieser Ansatz vor, die Anwesenheit von Personen nicht auszuschließen. Diese Methode verwendet deduktive Schlussfolgerungen, bei denen allgemeine Regeln auf spezifische Fälle angewendet werden, um sicherere und genauere Schlussfolgerungen zu ziehen, vorausgesetzt, die Prämissen sind korrekt.

Beim deduktiven Schließen wird anhand klar definierter Regeln und der gesammelten Sensordaten ermittelt, ob die Anwesenheit eines Menschen nicht ausgeschlossen werden kann. Das bedeutet, dass das System nicht versucht, mit Sicherheit zu erkennen, dass ein Objekt ein Mensch ist, sondern dass es versucht, zu erkennen, ob ein Objekt möglicherweise ein Mensch sein könnte, d.h., eine Anwesenheit einer Person nicht ausgeschlossen werden kann. Wenn die Sensoren einzelne Merkmale eines Menschen erkennen, wird davon ausgegangen, dass die Anwesenheit eines Menschen nicht ausgeschlossen werden kann, und es werden entsprechende Sicherheitsmaßnahmen ergriffen.

Dieser Ansatz hat mehrere Vorteile. Erstens erhöht er die Sicherheit, da er konservativ ist und immer dann Schutzmaßnahmen einleitet, wenn Unsicherheit besteht. Zweitens verbessert er die Flexibilität und Anpassungsfähigkeit von Sicherheitssystemen, da sie nicht auf die fehleranfällige und oft unzureichende Technologie zur eindeutigen Personenerkennung angewiesen sind. Drittens ermöglicht dieser Ansatz eine effizientere Integration von Multisensorsystemen. Die verschiedenen Sensoren können kombiniert werden, um eine breitere Datengrundlage zu schaffen, auf der deduktive Schlussfolgerungen basieren können.

Konkret sieht die beanspruchte Lösung eine Vorrichtung zur sicheren Abwesenheitserkennung von Personen in einem Überwachungsbereich einer technischen Anlage vor mit drei wesentlichen Komponenten: eine Datenerfassungseinheit, eine Merkmalsextraktionseinheit und ein deduktives Entscheidungsmodul.

Die Datenerfassungseinheit ist mit einem Sensor koppelbar und dient dazu, Sensordaten aus der Umgebung zu erfassen. Diese Sensordaten können verschiedene Formen annehmen, wie beispielsweise visuelle Daten von Kameras, Wärmebilder, Radarsignale oder andere Sensortypen, die für die Erkennung von Objekten und deren Eigenschaften geeignet sind.

Die Merkmalsextraktionseinheit ist dafür zuständig, aus den aufgenommenen Sensordaten menschenspezifische Merkmale zu extrahieren. Diese Merkmale können verschiedene physiologische oder verhaltensbezogene Indikatoren umfassen, wie Konturen des menschlichen Körpers, Bewegungsmuster, Körpertemperatur, Herzschlag oder andere charakteristische Merkmale, die auf die Anwesenheit eines Menschen hinweisen.

Das deduktive Entscheidungsmodul verwendet die extrahierten Merkmale, um durch deduktives Schließen festzustellen, ob die Anwesenheit einer Person im Überwachungsbereich nicht ausgeschlossen werden kann. Wenn aufgrund der erkannten Merkmale die Möglichkeit besteht, dass sich eine Person im überwachten Bereich aufhält, leitet das Modul eine sicherheitsbezogene Aktion ein. Diese Aktion kann beispielsweise das Stoppen oder Verlangsamen einer Maschine, das Auslösen eines Alarms oder andere Maßnahmen zur Gewährleistung der Sicherheit umfassen.

Ein praktisches Beispiel wäre die Kombination von 3D-Kameras, Wärmebildkameras und Radarsystemen sowie einer Merkmalsextraktionseinheit, die aus der Summe der Sensordaten menschenspezifische Merkmale extrahiert. Wenn ein Merkmal einen Hinweis auf die Anwesenheit eines Menschen liefert, wird die Anwesenheit eines Menschen angenommen und Sicherheitsmaßnahmen, wie z. B. das Stoppen einer Maschine oder das Ändern eines Betriebsmodus, werden aktiviert.

Insgesamt bietet der Ansatz der sicheren Nicht-Personenerkennung eine vielversprechende Alternative zur traditionellen wahrscheinlichkeitsbasierten Personenerkennung, indem er die inhärenten Unsicherheiten aktueller Technologien berücksichtigt und auf deduktiven Schlussfolgerungen basiert, die robustere und sicherere Entscheidungen ermöglichen.

In einer weiteren Ausgestaltung kann das deduktive Entscheidungsmodul eine Inferenzmaschine sein.

Eine Inferenzmaschine nutzt vordefinierte Regeln und logische Schlussfolgerungen, um Entscheidungen zu treffen, was bedeutet, dass die Ergebnisse transparent und nachvollziehbar sind. Dies führt zu robusteren Sicherheitsmaßnahmen, da die Inferenzmaschine systematisch alle verfügbaren Daten analysiert und auf Basis klarer, logischer Regeln agiert.

In einer weiteren Ausgestaltung kann die deduktive Schlussfolgerung eine Verknüpfung der extrahierten menschenspezifischen Merkmale mit logischem ODER (Veroderung) beinhalten.

Durch die Verwendung der logischen ODER-Verknüpfung werden verschiedene menschenspezifische Merkmale so kombiniert, dass das Vorhandensein nur eines dieser Merkmale ausreicht, um die Anwesenheit einer Person nicht auszuschließen. Das heißt, wenn auch nur eines der Merkmale wie Bewegungsmuster, Körperkontur oder Temperatur erkannt wird, wird der Schluss gezogen, dass sich möglicherweise eine Person im Überwachungsbereich aufhält. Diese Methode vereinfacht den deduktiven Prozess, da sie nicht auf das gleichzeitige Vorhandensein aller Merkmale angewiesen ist, sondern jedes einzelne Merkmal als ausreichend betrachtet. Dadurch wird die Erkennungslogik robuster und weniger fehleranfällig, was die Sicherheit und Zuverlässigkeit der Überwachungssysteme erhöht.

In einer weiteren Ausgestaltung kann die Merkmalsextraktionseinheit dazu eingerichtet sein, gleichzeitig mehrere menschenspezifische Merkmale zu extrahieren und zu analysieren.

Durch die gleichzeitige Erfassung und Analyse mehrerer menschenspezifischer Merkmale wie Konturen, Bewegungsmuster, Temperatur und Herzschlag werden die Stärken verschiedener Sensoren kombiniert. Dies ermöglicht eine robustere und zuverlässigere Erkennung, da die Schwächen eines Sensors durch die Stärken eines anderen ausgeglichen werden können. Beispielsweise kann eine Kamera visuelle Informationen liefern, während ein Radarsensor Bewegungen unabhängig von den Lichtverhältnissen erkennt und eine Wärmebildkamera Temperaturunterschiede aufzeigt.

Die Fähigkeit, mehrere Merkmale gleichzeitig zu extrahieren und zu analysieren, vereinfacht nicht nur den Erkennungsprozess, sondern macht ihn überhaupt erst möglich. Ohne Sensorfusion wären viele Szenarien nicht ausreichend abdeckbar, da einzelne Sensortypen jeweils ihre spezifischen Einschränkungen haben. Durch die Fusion der Sensordaten können deduktive Schlussfolgerungen mit höherer Genauigkeit und Zuverlässigkeit getroffen werden, was die Sicherheit und Effektivität des gesamten Systems erhöht. Diese Kombination der Daten führt zu einem umfassenderen Bild der Umgebung und ermöglicht es, die Anwesenheit einer Person auf Grundlage einer breiteren Datenbasis auszuschließen.

In einer weiteren Ausgestaltung kann die Merkmalsextraktionseinheit eine Kl-basierte Merkmalsextraktionseinheit sein, die ein trainiertes neuronales Netz zur Merkmalsextraktion verwendet.

Eine Kl-basierte Merkmalsextraktionseinheit ist ein System, das darauf ausgelegt ist, relevante Merkmale aus Rohdaten zu identifizieren und zu extrahieren. Diese Einheit nutzt ein trainiertes Neuronales Netz, um komplexe Muster in den Daten zu erkennen und zu analysieren. Durch den Einsatz von Deep Learning-Algorithmen kann das System aus großen Mengen von Trainingsdaten lernen und spezifische Merkmale wie Konturen, Bewegungsmuster oder Temperaturunterschiede erkennen. Die Merkmalsextraktionseinheit arbeitet währenden der Inferenz dann in Echtzeit und liefert präzise und zuverlässige Informationen, die für weitere Entscheidungsprozesse verwendet werden können. Das neuronale Netz kann aus mehreren Schichten von Neuronen gebildet sein, die zusammenarbeiten, um die relevanten Merkmale zu identifizieren und zu extrahieren, wobei jede Schicht spezifische Aspekte der Daten verarbeitet. Die erste Schicht kann einfache Merkmale wie Kanten erkennen, während tiefere Schichten komplexere Merkmale wie Gesichter oder menschliche Bewegungen identifizieren. Durch kontinuierliches Training und Anpassung kann das neuronale Netz ihre Genauigkeit und Effizienz im Laufe der Zeit weiter verbessern, wodurch sie in verschiedenen Anwendungen wie der automatischen Personenerkennung oder der Überwachung von Sicherheitsbereichen eingesetzt werden kann.

In einer weiteren Ausgestaltung kann der Sensor eine Kamera, insbesondere eine 3D-Kamera oder eine Wärmebildkamera, beinhalten.

Kameras im Allgemeinen und 3D-Kameras im Speziellen können räumliche Informationen erfassen und genaue Modelle der Umgebung erstellen, während Wärmebildkameras Temperaturunterschiede erkennen können, die auf menschliche Anwesenheit hinweisen. Diese Technologien können sich ergänzen, um eine robuste Grundlage für die Merkmalsextraktion zu bieten.

In einer weiteren Ausgestaltung kann der Sensor einen Radarsensor beinhalten.

Radarsensoren sind besonders vielseitig und leistungsfähig, da sie nicht nur die Position und Bewegung von Objekten erfassen können, sondern auch spezifische Merkmale, die auf die Anwesenheit von Menschen hinweisen.

Radarsensoren haben bspw. die Fähigkeit zur Radar Cross Section (RCS) Analyse. Die RCS misst die reflektierte Radarenergie von Objekten und kann dabei helfen, unterschiedliche Materialien und Strukturen zu identifizieren. Menschen haben charakteristische RCS-Werte, die sich von denen anderer Objekte unterscheiden, was eine zuverlässige Erkennung ermöglicht. Zusätzlich zur RCS können Radarsensoren die Energiedichte messen, die Hinweise auf die Präsenz und Dichte von Objekten im Überwachungsbereich gibt.

Ferner können Radarsensoren auch feine Bewegungen erkennen, die mit menschlichen Vitalfunktionen verbunden sind. Beispielsweise können sie den Herzschlag und die Atmung eines Menschen detektieren, indem sie die winzigen Bewegungen des Brustkorbs erfassen. Diese Fähigkeit, lebenswichtige Zeichen wie Herzschlag und Atmung zu erkennen, ermöglicht eine noch präzisere Identifikation von Menschen, selbst wenn sie sich nicht aktiv bewegen. Diese zusätzlichen Erkennungsmerkmale erhöhen die Zuverlässigkeit der Abwesenheitserkennung und tragen zur Sicherheit und Effektivität des Überwachungssystems bei.

In einer weiteren Ausgestaltung kann die Merkmalsextraktionseinheit für die Erkennung von Konturen, Skelett, Herzschlag, Atmung, Temperatur, Energiedichte, und/oder Bewegungsmuster eingerichtet sein.

Diese Merkmale können entweder von einem einzigen Sensor oder von verschiedenen Sensoren erfasst werden, was die Flexibilität und Genauigkeit des Systems erheblich erhöht.

Ein einzelner Sensor kann mehrere dieser Merkmale gleichzeitig erfassen. Beispielsweise kann eine hochentwickelte 3D-Kamera sowohl die Konturen als auch das Skelett eines Menschen erkennen, während eine Wärmebildkamera sowohl die Temperatur als auch die Atmung anhand von Temperaturänderungen im Brustbereich detektieren kann. Diese multifunktionalen Sensoren reduzieren die Notwendigkeit für zahlreiche unterschiedliche Sensoren und vereinfachen das Systemdesign.

Alternativ können verschiedene Merkmale von unterschiedlichen Sensoren erfasst werden, um die Robustheit und Präzision der Erkennung zu verbessern. Ein Radarsensor könnte die Bewegungsmuster und die Energiedichte eines Objekts überwachen, während ein optischer Sensor die Konturen und das Skelett erfasst. Gleichzeitig könnte ein weiterer Sensor, wie eine Infrarotkamera, die Körpertemperatur messen und sogar kleinste Bewegungen, die mit der Atmung oder dem Herzschlag verbunden sind, erkennen. Diese sensorübergreifende Datenerfassung ermöglicht eine umfassendere Analyse und erhöht die Zuverlässigkeit der Personenerkennung, indem die spezifischen Stärken jedes Sensors genutzt werden und Schwächen ausgeglichen werden können.

In einer weiteren Ausgestaltung kann der mindestens eine Sensor eigensicher sein.

"Eigensicher" bedeutet in diesem Zusammenhang, dass der Sensor so konstruiert ist, dass es selbst unter Fehlerbedingungen keine gefährlichen Zustände für Personen oder die Umgebung herbeiführen kann. Dies wird durch spezielle Konstruktionsprinzipien erreicht, die sicherstellen, dass mögliche Fehler, wie Kurzschlüsse oder Ausfälle von Komponenten, keine gefährlichen Zustände hervorrufen. Eigensichere Systeme und Komponenten sind häufig mit redundanten Mechanismen, integrierten Selbsttests und kontinuierlichen Überwachungsfunktionen ausgestattet, um sicherzustellen, dass sie zuverlässig und sicher arbeiten, auch wenn Teile des Systems versagen sollten.

In einer weiteren Ausgestaltung kann die Merkmalsextraktionseinheit nicht sicherheitsgerichtet implementiert sein.

Gemäß dieser Ausgestaltung muss die Merkmalsextraktionseinheit nicht sicherheitsgerichtet implementiert sein, insbesondere wenn der Sensor eigensicher ist und das Entscheidungsmodul auf deduktive Weise arbeitet. Dies bringt den Vorteil, dass die Merkmalsextraktionseinheit auf günstige Weise implementierbar ist, da einfache Entwicklungsprozesse genutzt werden können.

In einer weiteren Ausgestaltung ist die technische Anlage in einem ersten Modus betreibbar, in dem von der technischen Anlage eine Gefahr für Personen und Gegenstände in der Umgebung der technischen Anlage ausgeht, und in einem zweiten Modus betreibbar, in dem von der technischen Einrichtung keine oder eine beherrschbare Gefahr für Personen und Gegenstände in der Umgebung der technischen Anlage ausgeht, und wobei die sicherheitsbezogene Aktion ein Umschalten von dem ersten Modus in den zweiten Modus umfasst, wenn die Anwesenheit einer Person in der Umgebung nicht (sicher) ausgeschlossen werden kann.

In dieser Ausgestaltung kann die technische Anlage in zwei verschiedenen Modi betrieben werden. Der erste Modus ist bspw. der Normalbetrieb, in dem die technische Anlage uneingeschränkt arbeitet. In diesem Modus kann die volle Leistungsfähigkeit und Produktivität der Anlage genutzt werden, wobei alle Funktionen und Prozesse ohne Einschränkungen ablaufen.

Der zweite Modus ist ein sicherer Betriebszustand, in dem die Anlage zwar nicht vollständig abgeschaltet ist, aber so konfiguriert wird, dass keine Gefahr für einen Bediener besteht oder diese beherrschbar ist. In diesem Modus wird die Anlage so eingestellt, dass ein Bediener sicher mit ihr interagieren kann. Dies kann beispielsweise durch eine Reduzierung der Geschwindigkeit, das Aktivieren zusätzlicher Sicherheitsvorkehrungen oder das Einschränken bestimmter gefährlicher Funktionen erreicht werden.

Ein wesentlicher Vorteil dieses Ansatzes ist, dass auch bei einer fälschlichen Annahme, dass ein Mensch anwesend sei, die Anlage zwar in den langsamen Modus wechselt, aber eben nicht ganz abgeschaltet wird, wie es im Fall eines starren Sicherheitskonzepts der Fall wäre. Dies bedeutet, dass die Anlage weiterhin betriebsfähig bleibt und wichtige Aufgaben ausgeführt werden können, während gleichzeitig die Sicherheit des Bedieners gewährleistet wird. Diese Flexibilität ermöglicht es, die Anlage sowohl effizient als auch sicher zu betreiben, indem sie sich dynamisch an die Anwesenheit von Personen im Überwachungsbereich anpasst, ohne unnötige Unterbrechungen und Produktivitätsverluste zu verursachen.

Insbesondere kann die Vorrichtung eine weitere Sicherheitseinrichtung aufweisen, die in dem zweiten Modus aktiviert ist, um eine Endabsicherung zu gewährleisten.

Diese zusätzliche Sicherheitseinrichtung stellt sicher, dass selbst im sicheren Modus keine unkontrollierten Gefahren bestehen. Sie bietet eine zusätzliche Schutzschicht, die kontinuierlich überwacht und sofort eingreifen kann, falls trotz der reduzierten Betriebsparameter eine Gefahrensituation entsteht. Dies sorgt für ein Höchstmaß an Sicherheit für den Bediener und gewährleistet, dass die Anlage auch unter den sichersten Bedingungen effizient weiterarbeiten kann.

In einer weiteren Ausgestaltung kann die Vorrichtung ferner eine Testeinheit aufweisen, die dazu eingerichtet ist, die Funktionsfähigkeit der Merkmalsextraktionseinheit mittels eines Agententests zu überprüfen.

Die Testeinheit kann verwendet werden, um die Funktionsfähigkeit der Merkmalsextraktionseinheit, insbesondere der Algorithmen oder neuronalen Netze, die zur Erkennung der menschenspezifischen Merkmale verwendet werden, kontinuierlich zu überprüfen. Beispielsweise können Agententests durchgeführt werden, um sicherzustellen, dass die Merkmalserkennung ordnungsgemäß funktioniert und die entsprechenden Algorithmen korrekt ausgeführt werden. Hierfür kann ein Datensatz bereitgestellt werden, der eine Vielzahl von menschenspezifischen Merkmalen abdeckt. Der Test der Merkmalserkennung wird so durchgeführt, dass die Algorithmen nicht mit den realen Sensordaten arbeiten, sondern mit Daten aus diesem speziellen Testdatensatz. Diese Testdaten repräsentieren verschiedene Szenarien und Merkmale, die in der realen Umgebung auftreten können.

Die Agententests können auf Anforderung einer Sicherheitssteuerung durchgeführt werden. Die Sicherheitssteuerung initiiert die Tests und überwacht die Ergebnisse, um sicherzustellen, dass die Merkmalsextraktionseinheit und ihre Algorithmen noch korrekt funktionieren. Die Erwartungshaltung bei diesen Tests ist klar definiert: Die Algorithmen müssen die Merkmale aus den Testdaten korrekt erkennen und verarbeiten. Durch diesen Ansatz wird sichergestellt, dass die Merkmalsextraktionseinheit nicht nur funktionsfähig ist, sondern auch weiterhin die erwarteten Ergebnisse liefert.

Die regelmäßige Durchführung dieser Agententests erhöht die Zuverlässigkeit und Sicherheit des Gesamtsystems. Sollte ein Test fehlschlagen, kann die Sicherheitssteuerung sofort Maßnahmen ergreifen, um mögliche Risiken zu minimieren, z. B. durch Umschalten in einen sicheren Betriebsmodus oder durch Auslösen von Wartungsmaßnahmen. Dieser kontinuierliche Prüfmechanismus stellt sicher, dass die Merkmalsextraktionseinheit immer optimal arbeitet und die Sicherheit der technischen Anlage nicht gefährdet wird und ist auch entscheidend für die Einstufung der Vorrichtung in eine hohe Sicherheitskategorie, wie z.B. SIL 2 und höher.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
- Fig. 1: zeigt am Beispiel einer industriellen Fertigungszelle ein mögliches Anwendungsszenario für ein Ausführungsbeispiel einer Vorrichtung zur sicheren Abwesenheitserkennung von Personen in einem Überwachungsbereich einer technischen Anlage.
- Fig. 2: zeigt in einer schematischen Darstellung ein Ausführungsbeispiel einer Vorrichtung zur sicheren Abwesenheitserkennung von Personen in einem Überwachungsbereich.
- Fig. 3: zeigt in schematischer Darstellung ein Beispiel für eine deduktive Schlussfolgerung.
- Fig. 4: zeigt eine erste Variante zur Realisierung von Agententests bei einer Vorrichtung zur sicheren Abwesenheitserkennung von Personen.
- Fig. 5: zeigt eine zweite Variante zur Realisierung von Agententests an einer Vorrichtung zur sicheren Abwesenheitserkennung von Personen.

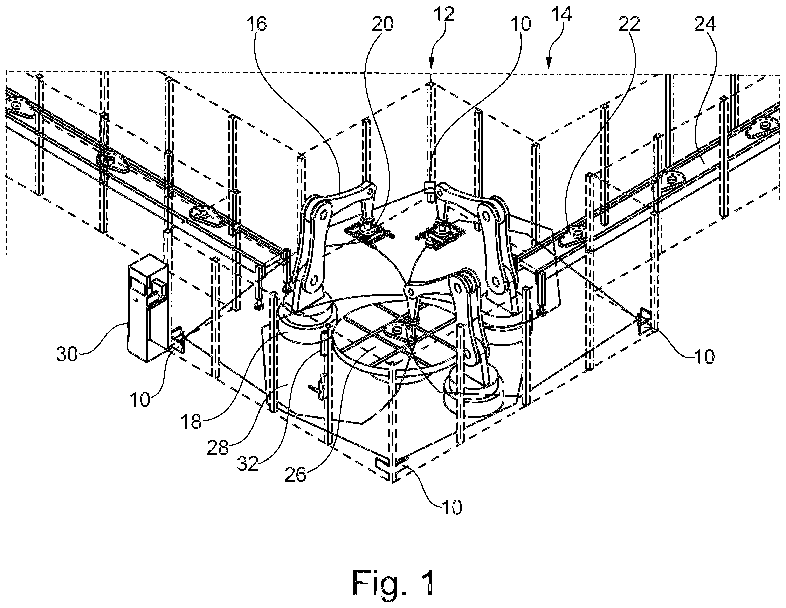

Fig. 1 zeigt an einem Beispiel einer industriellen Fertigungszelle ein mögliches Anwendungsszenario für ein Ausführungsbeispiel der Vorrichtung zur sicheren Abwesenheitserkennung von Personen in einem Überwachungsbereich einer technischen Anlage.

In Fig. 1 ist die industrielle Fertigungszelle 12 von einer trennenden Schutzeinrichtung umgeben. Die trennende Schutzeinrichtung ist hier eine Schutzumhausung 14, d. h. eine komplette Umhausung, die die gesamte Maschine oder große Teile davon umschließt und den Zugang auf bestimmte, kontrollierte Punkte beschränkt. Natürlich kann die trennende Schutzeinrichtung auch eine andere physische Barriere sein, wie z.B. ein Schutzgitter oder ein Schutzzaun, der den unbefugten Zugang zur Maschine oder zu anderen Gefahrenbereichen verhindert.

Innerhalb der Schutzumhausung 14 sind hier beispielhaft für eine technische Anlage drei Industrieroboter 16 angeordnet, die jeweils auf einem Sockel 18 montiert sind. Die Industrieroboter 16 sind mit Greifern 20 ausgestattet, die Werkstücke 22 von einem Förderband 24 aufnehmen und zu einer Bearbeitungsstation 26 transportieren.

Die Schutzumhausung 14 ist hier einseitig durch eine Schutztür 28 zugänglich, die den Zugang zu der industriellen Fertigungszelle 12 in das Innere der Schutzumhausung 14 ermöglicht. Zur Absicherung des durch die Schutzumhausung 14 definierten Schutzraums sind Radarsensoren 10 installiert, die den Bereich innerhalb der Schutzumhausung 14 überwachen. Die Radarsensoren 10 sind an den Ecken und Zugängen der Schutzumhausung 14 positioniert, um eine vollständige Abdeckung des Arbeitsbereichs des Roboters zu gewährleisten.

Bei einem unzulässigen Eindringen einer Person oder eines Gegenstandes in die Schutzumhausung erkennen die Radarsensoren 10 dieses Eindringen und überführen die Industrieroboter 16 mittels einer Sicherheitsschalteinrichtung in einen sicheren Zustand. Dieser sichere Zustand kann ein sofortiger Stopp der Bewegungen sein, z. B. durch Abschalten der Stromversorgung der Roboter, oder das Einnehmen einer vordefinierten sicheren Position, um Unfälle oder Beschädigungen zu vermeiden.

Eine Steuerung 30 der Fertigungszelle 12 ist außerhalb der Schutzumhausung 14 angeordnet und ermöglicht die Bedienung und Überwachung der Roboter 16. Die Sicherheitssysteme der Fertigungszelle 12 sind an die Sicherheitsschalteinrichtung, bspw. eine Sicherheitssteuerung, angeschlossen, die als Bestandteil der Steuerung 30 oder separat ausgebildet ist. Neben den Radarsensoren 10 zur Schutzraumüberwachung als Sensor der Sicherheitssysteme ist hier zusätzlich die Schutztür 28 mit einem Sicherheitsschalter 32 ausgestattet, der ein Öffnen der Tür nur bei Stillstand der Roboter 16 zulässt.

Die Vorrichtung zur sicheren Abwesenheitserkennung von Personen in einem Überwachungsbereich lässt sich nahtlos in dieses beschriebene Szenario der industriellen Fertigungszelle 12 integrieren. In diesem Anwendungsbeispiel sind die Radarsensoren 10 bereits vorhanden, um den Bereich innerhalb der Schutzumhausung 14 zu überwachen. Diese Radarsensoren 10 können als Sensor der beanspruchten Vorrichtung fungieren, indem sie kontinuierlich Sensordaten erfassen und diese an die Merkmalsextraktionseinheit weiterleiten.

Die Merkmalsextraktionseinheit analysiert die von den Radarsensoren 10 erfassten Daten, um menschenspezifische Merkmale wie Bewegungsmuster, Herzschlag oder Atmung etc. zu extrahieren. Die extrahierten Merkmale werden dann an das deduktive Entscheidungsmodul übermittelt. Das Entscheidungsmodul bewertet diese Merkmale deduktiv, um festzustellen, ob die Anwesenheit einer Person nicht ausgeschlossen werden kann.

Sollte das Entscheidungsmodul anhand der extrahierten Merkmale zu dem Schluss kommen, dass sich möglicherweise eine Person im überwachten Bereich befindet, wird eine sicherheitsbezogene Aktion eingeleitet. In diesem Szenario könnte dies bedeuten, dass die Sicherheitsschalteinrichtung aktiviert wird, um die Industrieroboter 16 in einen sicheren Zustand zu überführen. Dies könnte das sofortige Stoppen der Roboterbewegungen oder das Einnehmen einer sicheren Position sein, um die Sicherheit der potentiell anwesenden Person zu gewährleisten. Es ist aber auch denkbar, dass eine andere sicherheitsgerichtete Aktion ausgeführt wird, z. B. das Umschalten eines Betriebsmodus der Industrieroboter in einen Modus, in dem keine Gefahr mehr für Personen besteht.

Durch die Integration der beanspruchten Vorrichtung wird das bestehende Sicherheitssystem der Fertigungszelle verbessert. Die Radarsensoren 10 übernehmen die Funktion, umfassende Daten zu sammeln, während die Merkmalsextraktionseinheit und das Entscheidungsmodul dafür sorgen, dass diese Daten zuverlässig und sicher ausgewertet werden. Dies reduziert die Wahrscheinlichkeit von Fehlalarmen und erhöht die Gesamtsicherheit, da die Anlage dynamisch auf potenzielle Gefahren reagieren kann. Die Sicherheitsschalteinrichtung bleibt das zentrale Element für die Ausführung der Sicherheitsmaßnahmen, wobei sie durch die präzise und zuverlässige Erkennung der Vorrichtung unterstützt wird. Vorteilhaft können neben den Radarsensoren 10 weitere Sensoren (hier nicht dargestellt) vorgesehen sein, die weitere Sensordaten bezogen auf die Umgebung der Fertigungszelle liefern und hinsichtlich menschenspezifischer Merkmale ausgewertet werden können.

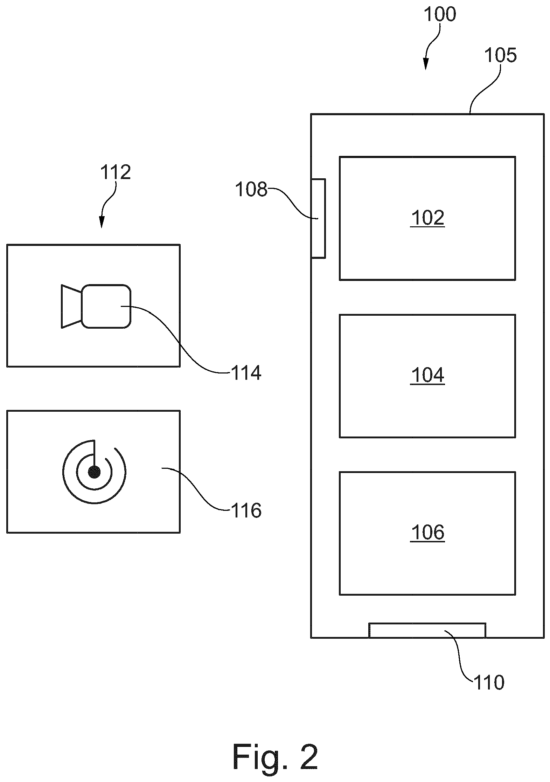

Fig. 2 zeigt in einer schematischen Darstellung ein Ausführungsbeispiel einer Vorrichtung zur sicheren Abwesenheitserkennung von Personen in einem Überwachungsbereich.

Die Vorrichtung ist hier in seiner Gesamtheit mit der Bezugsziffer 100 bezeichnet und weist drei Einheiten auf: eine Datenerfassungseinheit 102, eine Merkmalsextraktionseinheit 104 und ein deduktives Entscheidungsmodul 106.

Die Einheiten sind hier als einzelne Komponenten dargestellt, können aber auch als logische Komponenten eines gemeinsamen Bauteils ausgebildet sein. Beispielsweise können die Datenerfassungseinheit 102, die Merkmalsextraktionseinheit 104 und das deduktive Entscheidungsmodul durch einen integrierten Schaltkreis, z. B. einen Mikrocontroller oder ein System-on-Chip, realisiert sein. Die Einheiten können daher in einem Gehäuse 105 angeordnet sein und eine eigenständige Baugruppe bilden. In einer anderen Ausführungsform können die Einheiten auch als logische Module auf verschiedene Geräte verteilt und über ein Kommunikationsmedium miteinander verbunden sein. So ist es beispielsweise denkbar, die Einheit zur Merkmalsextraktion auf eine rechenstarke Einheit auszulagern, an die die Sensordaten übertragen werden und die die extrahierten Merkmale zurückliefert.

Die Datenerfassungseinheit 102 ist mit mindesten einen Sensor koppelbar und dient dazu, Sensordaten aus der Umgebung zu erfassen. Diese Sensordaten können verschiedene Formen annehmen, wie beispielsweise visuelle Daten von Kameras, Wärmebilder, Radarsignale oder andere Sensortypen, die für die Erkennung von Objekten und deren Eigenschaften geeignet sind.

Die Merkmalsextraktionseinheit 104 ist dafür zuständig, aus den aufgenommenen Sensordaten menschenspezifische Merkmale zu extrahieren. Diese Merkmale können verschiedene physiologische oder verhaltensbezogene Indikatoren umfassen, wie Konturen des menschlichen Körpers, Bewegungsmuster, Körpertemperatur, Herzschlag oder andere charakteristische Merkmale, die auf die Anwesenheit eines Menschen hinweisen.

Das deduktive Entscheidungsmodul 106 verwendet die extrahierten Merkmale, um durch deduktives Schließen festzustellen, ob die Anwesenheit einer Person im Überwachungsbereich nicht ausgeschlossen werden kann. Wenn aufgrund der erkannten Merkmale die Möglichkeit besteht, dass sich eine Person im überwachten Bereich aufhält, leitet das Modul eine sicherheitsbezogene Aktion ein. Diese Aktion kann beispielsweise das Stoppen oder Verlangsamen einer Maschine, das Auslösen eines Alarms oder andere Maßnahmen zur Gewährleistung der Sicherheit umfassen.

Deduktiv Schlussfolgern bedeutet, von allgemeinen Prinzipien oder Theorien auf spezifische Fälle zu schließen. Es beginnt mit einer allgemeinen Aussage oder Prämisse, die als wahr angenommen wird, und leitet daraus spezifische, notwendigerweise wahre Schlussfolgerungen ab. Ein Beispiel ist die klassische logische Argumentation: "Alle Menschen sind sterblich. Sokrates ist ein Mensch. Also ist Sokrates sterblich." Hier wird von einer allgemeinen Regel (alle Menschen sind sterblich) auf einen speziellen Fall (Sokrates) geschlossen.

Induktiv Schlussfolgern hingegen verläuft vom Spezifischen zum Allgemeinen. Es beginnt mit spezifischen Beobachtungen oder empirischen Daten und leitet daraus allgemeine Prinzipien oder Theorien ab. Induktive Schlüsse sind probabilistischer Natur, das heißt, sie führen zu Schlussfolgerungen, die wahrscheinlich, aber nicht zwingend wahr sind. Ein Beispiel wäre die Beobachtung mehrerer weißer Schwäne und daraus abzuleiten, dass alle Schwäne weiß sind. Diese Schlussfolgerung ist jedoch immer anfällig für neue Beobachtungen, die sie widerlegen könnten, wie das Auftauchen eines schwarzen Schwans.

Damit das deduktiv Entscheidungsmodul 106 eine deduktive Schlussfolgerung treffen kann, kommt es maßgeblich auf die Wahl der Frage an, über welche das deduktiv Entscheidungsmodul 106 entscheiden soll. Bei der Vorrichtung ist diese Frage im Gegensatz zu bekannten Vorrichtungen, nicht die Frage, ob eine Person anwesend ist, sondern die Frage, ob die Anwesenheit einer Person auf der Grundlage der vorliegenden Sensordaten nicht ausgeschlossen werden kann. Diese Entscheidung kann deduktiv getroffen werden. Das deduktive Entscheidungsmodul kann somit eine Inferenzmaschine sein.

Wie in Fig. 2 dargestellt, kann die Vorrichtung weitere Einheiten aufweisen. Exemplarisch sind hier eine Eingangseinheit 108 und eine Ausgangseinheit 110 dargestellt. Die Eingangseinheit 108 kann in Form einer oder mehrerer Schnittstellen ausgebildet sein, über die die Vorrichtung 100 mit einem oder mehreren Sensoren 112 koppelbar ist, um die Sensordaten aufzunehmen. Als Sensoren 112 kommen verschiedene Sensoren in Betracht, wie bspw. eine Kamera 114 oder ein Radarsensor 116. Die Sensoren 112 können insbesondere eigensichere Sensoren sein.

Die Ausgangseinheit 110 kann ebenfalls in Form einer oder mehrerer Schnittstellen ausgebildet sein und die Vorrichtung mit Aktoren (hier nicht dargestellt) verbinden, um die sicherheitsbezogene Aktion einzuleiten, wenn dies von dem deduktiven Entscheidungsmodul angezeigt wird. Die sicherheitsbezogene Aktion kann auch von einer nachgelagerten Einheit, bspw. einer Steuerung der technischen Anlage oder einer Sicherheitsteuerung realisiert werden. Die Ausgangseinheit 110 kann in diesem Fall eine Kommunikationsschnittstelle sein, über die eine Schlussfolgerung des deduktiven Entscheidungsmodul 106 zur weiteren Verarbeitung übermittelt wird.

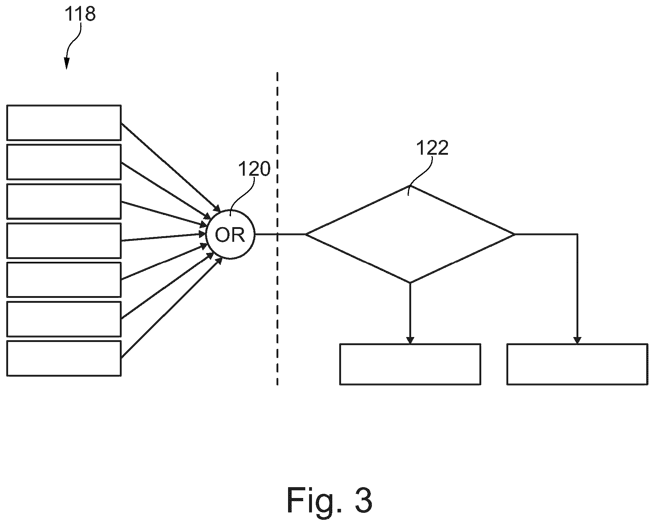

Fig. 3 zeigt in einer schematischen Darstellung ein Beispiel für eine deduktive Schlussfolgerung.

Eingangsseitig sind hier die einzelnen menschenspezifischen Merkmale 118 angedeutet, die von der Merkmalsextraktionseinheit bereitgestellt werden können. Das deduktive Entscheidungsmodul ist in diesem Beispiel dazu eingerichtet, die Merkmale mit einem logischen ODER 120 zu verknüpfen (Veroderung) und darauf basierend eine Entscheidung zu treffen. Mit anderen Worten: Das deduktive Entscheidungsmodul trifft dann eine Entscheidung, wenn eines der Merkmale vorliegt. Die Frage 122, die von dem Entscheidungsmodul beantwortet wird, ist die Frage, ob eine Anwesenheit einer Person nicht ausgeschlossen werden kann. Diese Frage ist mit JA zu beantworten, wenn mindestens ein menschenspezifisches Merkmal angezeigt wird. Das Entscheidungsmodul arbeitet somit rein regelbasiert und deterministisch und ist somit für sich genommen überprüf- und verifizierbar. Dies kann bei einer sicherheitstechnischen Analyse von großer Bedeutung sein und ist vorteilhaft gegenüber probabilistischen Ansätzen auf Basis induktiver Schlussfolgerung.

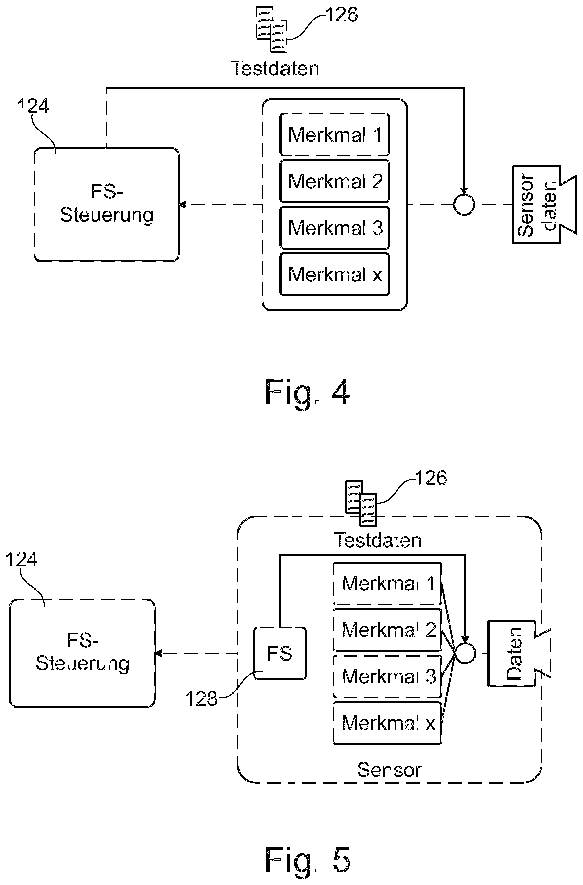

Fig. 4 und Fig. 5 zeigen Varianten zur Realisierung von Agententests bei einer Vorrichtung zur sicheren Abwesenheitserkennung von Personen.

Unter dem Begriff "Agententest" in der sicheren Automatisierungstechnik versteht man eine spezifische Testmethode, bei der Software- oder Hardware-Komponenten, sogenannte Agenten, überprüft werden, um sicherzustellen, dass sie in sicherheitskritischen Systemen zuverlässig funktionieren. Diese Agenten sind oft autonome Einheiten, die Aufgaben innerhalb eines größeren Systems ausführen, und ihr korrektes Verhalten ist entscheidend, um die Sicherheit des Gesamtsystems zu gewährleisten. Der Agententest bewertet, ob die Agenten korrekt auf verschiedene Szenarien und Eingaben reagieren und ob sie die definierten Sicherheitsanforderungen erfüllen.

Bei der vorliegenden Vorrichtung versteht man unter einem Agententest eine Methode zur Überprüfung der Funktionsfähigkeit von Algorithmen oder neuronalen Netzen, die in sicherheitskritischen Anwendungen eingesetzt werden. Dabei werden speziell vorbereitete Testdaten anstelle der realen Sensordaten in das System eingespeist, um sicherzustellen, dass die Merkmalsextraktionseinheit und die dazugehörigen Algorithmen korrekt arbeiten und zuverlässige Ergebnisse liefern.

Der Agententest kann, wie in Fig. 4 dargestellt, durch eine Sicherheitssteuerung initiiert werden, die festlegt, wann und wie die Tests durchgeführt werden. Der Test-Datensatz ist so gestaltet, dass er eine Vielzahl von menschenspezifischen Merkmalen abdeckt und verschiedene Szenarien simuliert, die in der realen Umgebung auftreten könnten. Während des Tests verarbeitet die Merkmalsextraktionseinheit diese Testdaten, und das Entscheidungsmodul zieht basierend auf diesen Daten seine Schlussfolgerungen.

Wenn die Vorrichtung in einen Sensor integriert ist und der Sensor selbst eine sicherheitsgerichtete Einrichtung 128 aufweist, kann der Agententest auch innerhalb des Sensors implementiert sein, wie in Fig. 5 dargestellt.

Es wird darauf hingewiesen, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die folgenden Ansprüche bestimmt und ist nicht durch die in der Beschreibung erläuterten oder in den Figuren dargestellten Merkmale begrenzt.

## Patentansprüche

1. Vorrichtung (100) zur sicheren Abwesenheitserkennung von Personen in einem Überwachungsbereich einer technischen Anlage, aufweisend:
eine Datenerfassungseinheit (102), die dazu eingerichtet ist, Sensordaten bezogen auf eine Umgebung der technischen Anlage aufzunehmen, die von mindestens einem Sensor bereitgestellt werden,
eine Merkmalsextraktionseinheit (104), die dazu eingerichtet ist, aus den Sensordaten menschenspezifische Merkmale zu extrahieren, sowie
ein deduktives Entscheidungsmodul (106), das dazu eingerichtet ist, eine sicherheitsbezogene Aktion einzuleiten, wenn aus einer deduktiven Schlussfolgerung anhand der extrahierten menschenspezifischen Merkmale eine Anwesenheit einer Person nicht ausgeschlossen werden kann.

2. Vorrichtung nach Anspruch 1, wobei das deduktive Entscheidungsmodul (106) eine Inferenzmaschine ist.

3. Vorrichtung nach Anspruch 1 oder 2, wobei die deduktive Schlussfolgerung eine Verknüpfung der extrahierten menschenspezifischen Merkmale mit logischem ODER beinhaltet.

4. Vorrichtung nach einem der Ansprüche 1 bis 3, wobei die Merkmalsextraktionseinheit (104) dazu eingerichtet ist, gleichzeitig mehrere menschenspezifische Merkmale zu extrahieren und zu analysieren.

5. Vorrichtung nach einem der Ansprüche 1 bis 4, wobei die Merkmalsextraktionseinheit (104) eine Kl-basierte Merkmalsextraktionseinheit ist, die ein trainiertes neuronales Netz zur Merkmalsextraktion verwendet.

6. Vorrichtung nach einem der Ansprüche 1 bis 5, wobei die Sensordaten Daten einer Kamera (114) sind, insbesondere einer 3D-Kamera oder einer Wärmebildkamera.

7. Vorrichtung nach einem der Ansprüche 1 bis 6, wobei die Sensordaten Daten eines Radarsensors (116) sind.

8. Vorrichtung nach einem der Ansprüche 1 bis 7, wobei die Merkmalsextraktionseinheit (104) für die Erkennung von Konturen, Skelett, Herzschlag, Atmung, Temperatur, Energiedichte, und/oder Bewegungsmuster eingerichtet ist.

9. Vorrichtung nach einem der Ansprüche 1 bis 8, wobei die sicherheitsbezogene Aktion eine sofortige Abschaltung der technischen Anlage oder eine Überführung der technischen Anlage in einen sicheren Zustand beinhaltet.

10. Vorrichtung nach einem der Ansprüche 1 bis 9, wobei die Sensordaten Daten eines eigensicheren Sensors sind.

11. Vorrichtung nach einem der Ansprüche 1 bis 10, wobei die Merkmalsextraktionseinheit (104) nicht sicherheitsgerichtet implementiert ist.

12. Vorrichtung nach einem der Ansprüche 1 bis 11, wobei die technische Anlage in einem ersten Modus betreibbar ist, in dem von der technischen Anlage eine Gefahr für Personen und Gegenstände in der Umgebung der technischen Anlage ausgeht, und in einem zweiten Modus betreibbar ist, in dem von der technischen Einrichtung keine oder eine beherrschbare Gefahr für Personen und Gegenstände in der Umgebung der technischen Anlage ausgeht, und wobei die sicherheitsbezogene Aktion ein Umschalten von dem ersten Modus in den zweiten Modus umfasst, wenn die Anwesenheit einer Person in der Umgebung nicht ausgeschlossen werden kann.

13. Vorrichtung nach Anspruch 12, wobei die Vorrichtung eine weitere Sicherheitseinrichtung aufweist, die in dem zweiten Modus aktiviert ist, um eine Endabsicherung zu gewährleisten.

14. Vorrichtung nach einem der Ansprüche 1 bis 13, ferner aufweisend: eine Testeinheit, die dazu eingerichtet ist, die Funktionsfähigkeit der Merkmalsextraktionseinheit (104) mittels eines Agententests zu überprüfen.

15. Verfahren zur sicheren Abwesenheitserkennung von Personen in einem Überwachungsbereich einer technischen Anlage, aufweisend:
- Aufnehmen von Sensordaten bezogen auf eine Umgebung der technischen Anlage mit mindestens einem Sensor;
- Extrahieren von menschenspezifischen Merkmalen aus den Sensordaten mittels einer Merkmalsextraktionseinheit;
- Einleiten einer sicherheitsbezogenen Aktion durch ein deduktives Entscheidungsmodul, wenn aus einer deduktiven Schlussfolgerung anhand der extrahierten menschenspezifischen Merkmale eine Anwesenheit einer Person nicht ausgeschlossen werden kann.
